# DEMANDE DE BREVET EUROPEEN

(11) **EP 0 759 267 A1**
(43) Date de publication de la demande: **26.02.1997**
(21) Numéro de dépôt: 95440056.0
(22) Date de dépôt: 18.08.1995
(51) Int. Cl.: A01B 63/108

(54) **Dispositif de débroussaillage et broyage forestier**

(71) Demandeur: MASSIN S.A., F-08140 Bazeilles (FR)
(72) Inventeur: La désignation de l'inventeur n'a pas encore été déposée
(74) Mandataire: Dénoyez, Hubert

(57) **Abrégé**

Dispositif de débroussaillage et broyage forestier adaptable sur un véhicule automobile du type tracteur chenillé, ou autre.

Il comporte au moins un rotor (6, 62, 63) transversal solidarisé à l'extrémité d'un ensemble de relevage (1) essentiellement constitué de bielles (2, 3, 5) formant deux structures déformables (10, 11) dans deux plans verticaux parallèles et s'articulant sur le châssis (40) de l'engin tracteur (4), à l'avant de celui-ci, ledit ensemble (1) incorporant un élément (22), extensible ou compressible, connecté au dispositif de relevage (32) dudit ensemble (1) par l'intermédiaire d'une détecteur de positionnement.

## Description

La présente invention a pour objet un dispositif de débroussaillage et broyage forestier adaptable sur un véhicule automobile du type tracteur chenillé, ou autre.

On connaît déjà de nombreux dispositifs permettant le débroussaillage et le broyage en forêt, dont la plupart sont solidarisés à l'arrière de l'engin, au relevage hydraulique trois points de celui-ci, ce qui implique que le travail de débroussaillage et de broyage s'effectue en marche arrière, ce qui est inconfortable pour l'opérateur.

Pour remédier à cet inconvénient on a proposé des engins tracteurs avec possibilité d'inversion du poste de pilotage, mais, outre que cette solution est coûteuse, l'engin doit rouler dans le sens inverse pour lequel il a été conçu.

De plus, la solidarisation des dispositifs existants est réalisée de façon rigide, ce qui nécessite que ceux-ci soient d'une grande solidité, donc très lourds et par voie de conséquence que l'engin tracteur soit de grande puissance afin de pouvoir forcer le passage, ce qui occasionne néanmoins des dommages au matériel lors de la rencontre d'obstacles imprévus comme des souches.

Afin d'éviter l'endommagement du matériel sur des obstacles invisibles, on a préconisé de réaliser le débroussaillage en deux passages, un premier à mi-hauteur permettant de mettre à jour les éventuels obstacles qui pourront ainsi être évités lors d'un second passage, mais ce procédé est long, donc coûteux en main d'oeuvre.

La présente invention vise à remédier à ces inconvénients en proposant un dispositif de débroussaillage et de broyage forestier de conception légère, permettant un débroussaillage efficace et rapide sans risques d'endommagement du matériel.

Un dispositif de débroussaillage selon l'invention se caractérise essentiellement en ce qu'il comporte au moins un rotor transversal solidarisé à l'extrémité d'un ensemble de relevage constitué de bielles formant deux structures déformables dans deux plans verticaux parallèles et s'articulant sur le châssis de l'engin tracteur, à l'avant de celui-ci, une bielle longitudinale de chacune desdites structures déformables incorporant un élément mécanique ou hydraulique, extensible ou compressible de façon limitée, et contrôlé par un détecteur de positionnement de type connu connecté au dispositif de relevage.

Selon une autre caractéristique du dispositif selon l'invention, le système d'avancement de l'engin tracteur est asservi, par des moyens connus en soi, au détecteur de positionnement de l'élément extensible ou compressible, qui peut être du type ressort ou piston.

Le fonctionnement du dispositif selon l'invention est le suivant : le ou les rotors sont abaissés en position de travail, et lorsque qu'ils rencontrent un obstacle du type souche, la pression exercée par ledit obstacle déforme les éléments extensibles ou compressibles, ce qui réduit les effets de choc et soulage ainsi la mécanique.

De plus si cette pression dépasse un seuil prédéterminé, ce dépassement est enregistré par le détecteur de positionnement, qui déclenche le relevage du ou des rotors et le ralentissement, voire l'arrêt de l'engin tracteur, qui peut alors contourner ou franchir l'obstacle, tandis que le ou les rotors reprennent leur position de travail.

Il se peut toutefois que le relevage se déclenche pour un obstacle que le ou les rotors sont aptes à détruire, dans ce cas, le seuil de déclenchement de relevage peut être modifié rapidement depuis le poste de pilotage, permettant ainsi d'attaquer et de détruire l'obstacle en avançant lentement sur celui-ci.

Un dispositif de rotor selon l'invention permet ainsi un débroussaillage rapide sans risques de casse mécanique tout en étant de conception légère, donc adaptable sur un engin de moindre puissance.

Les avantages et les caractéristiques de la présente invention ressortiront plus clairement de la description qui suit et qui se rapporte au dessin annexé, lequel en représente plusieurs modes de réalisation non limitatifs.

Dans le dessin annexé :
- la figure 1 représente une vue schématique simplifiée, en perspective, d'un dispositif selon l'invention.
- la figure 2 représente une vue schématique de profil du même dispositif .
- la figure 3 représente une vue schématique de profil d'une variante du dispositif selon l'invention.

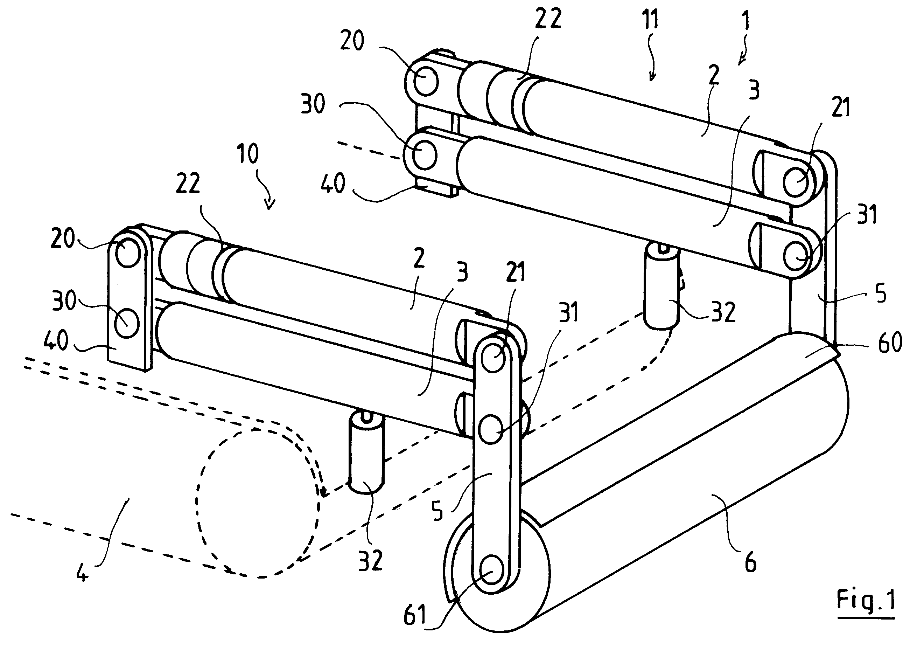

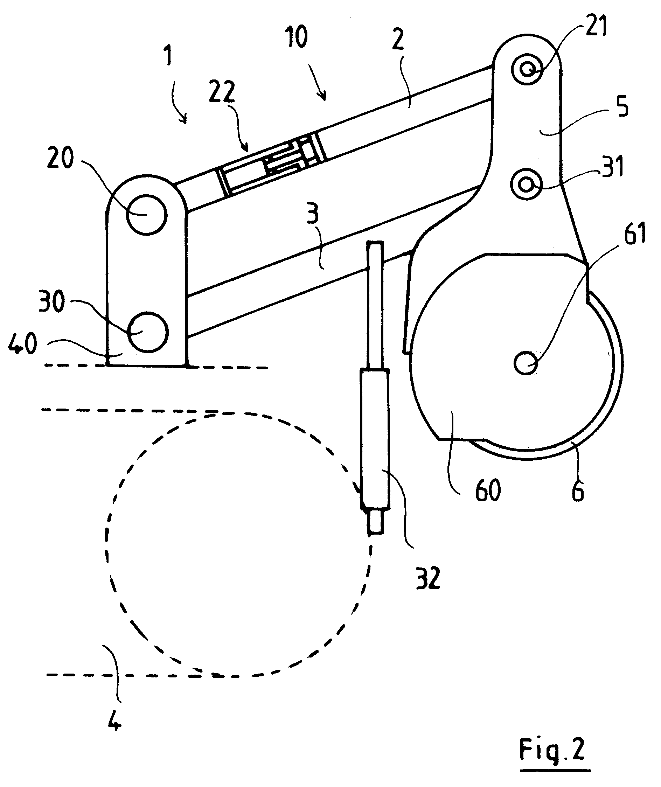

Si on se réfère aux figures 1 et 2 on peut voir qu'un dispositif de débroussaillage selon l'invention comporte un ensemble de relevage 1 constitué de deux paires 10 et 11 de bielles 2 et 3, positionnées respectivement l'une au-dessus de l'autre, articulées par une de leurs extrémités sur le châssis 40 d'un engin tracteur 4, par l'intermédiaire d'axes transversaux parallèles, respectivement 20 et 30, les bielles 2 et 3 de chacune des paires 10 et 11 étant montées pivotantes par leurs autres extrémités autour d'axes, respectivement 21 et 31, sur une bielle 5 sensiblement verticale dont l'extrémité inférieure est solidarisée à l'axe 61 d'un rotor 6 et qui porte également le carter 60 de celui-ci.

Il est à noter que les paires de bielles 10 et 11 sont de préférence reliées par des traverses, non représentées, donnant une plus grande rigidité à l'ensemble 1.

Les bielles inférieures 3 sont reliées au châssis 40 de l'engin tracteur 4 par l'intermédiaire de vérins hydrauliques 32 fonctionnant en parallèle, permettant le relèvement ou l'abaissement de l'ensemble de relevage 1.

Les bielles supérieures 2 des paires de bielles 10 et 11 comportent chacune un élément extensible 22 de type connu, mécanique à ressort, hydraulique ou autre, équipé d'un détecteur de positionnement de type connu, non représenté, lui-même relié à la commande des vérins 32.

Il convient de noter que selon un autre mode de réalisation, les bielles supérieures 2 peuvent ne pas comporter d'éléments extensibles 22, auquel cas les bielles inférieures 3 comprennent chacune un élément compressible.

En fonctionnement, le rotor 6 pend sous l'ensemble de relevage 1 avec une certaine liberté de déplacement angulaire due à la souplesse des éléments extensibles 22, et lorsque le rotor 6 rencontre un obstacle offrant une certaine résistance, la traction exercée en réaction sur les bielles 2 étend les éléments extensibles 22 jusqu'à un certain seuil prédéterminé, le franchissement de ce seuil entraînant, par l'intermédiaire du détecteur de positionnement, l'extension des vérins 32 et donc le relevage de l'ensemble 1.

Le détecteur de positionnement est également relié, par des moyens connus en soi, au système de commande d'avance de l'engin tracteur 4, permettant ainsi de ralentir, voire de stopper celui-ci lorsqu'il rencontre un obstacle.

La forme particulière de l'ensemble de relevage 1 permet, par le système de parallélogramme déformable que forment les bielles 2, 3 et 5, un relevage à la verticale des bielles 5, donc du rotor 6.

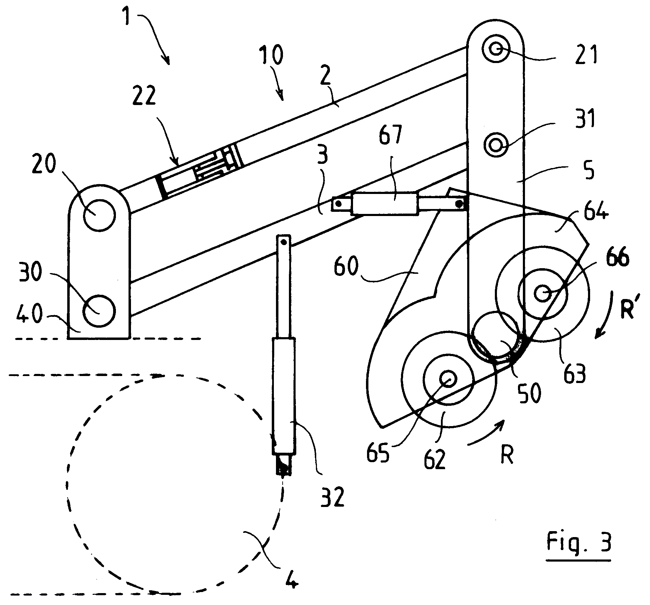

Si on se réfère maintenant à la figure 3 on peut voir que dans un second mode de réalisation à deux rotors transversaux 62 et 63 parallèles tournant dans des sens inverses R et R', l'ensemble de relevage 1 reste identique à celui du mode de réalisation précédent, étant également constitué de bielles 2, 3 et 5 articulées entre elles et sur le châssis 40, tandis que le carter 60 des rotors 62 et 63 est monté pivotant entre les extrémités des bielles 5 autour d'un axe 50 parallèle aux axes 65 et 66 des rotors 62 et 63, lesdits axes 65 et 66 étant montés pivotants entre les flasques 64 du carter 60, disposés de part et d'autre de l'axe 50.

Deux vérins 67, dont un seul est visible sur la figure, reliant le carter 60 à chacune des bielles inférieures 3 de l'ensemble 1, permettent d'incliner le carter 60, donc l'ensemble des deux rotors 62 et 63 afin de placer ceux-ci dans la position la plus favorable en fonction des conditions de travail.

Il convient de noter que l'ensemble de relevage 1 peut être constitué de plusieurs bielles s'articulant entre elles en prenant des formes différentes de celle décrite ci-dessus, étant entendu que cette dernière est la plus simple à mettre en oeuvre.

On peut par exemple, selon un autre mode de réalisation, disposer d'un ensemble de relevage constitué de seulement deux bielles parallèles dans des plans verticaux différents, articulées sur le châssis de l'engin tracteur, et à chacune des extrémités desquelles est solidarisée de façon pivotante une bielle qui porte l'une des extrémités de l'axe du rotor, le contrôle de la pression étant réalisé par un ou plusieurs éléments compressibles reliant triangulairement l'ensemble de relevage et le rotor.

Il va de soi que la présente invention ne saurait être limitée à la description qui précède de quelques modes de réalisation, susceptibles de subir un certain nombre de modifications sans pour autant sortir du cadre de l'invention.

## Revendications

1. Dispositif de débroussaillage et broyage forestier adaptable sur un véhicule automobile du type tracteur chenillé, ou autre, caractérisé en ce qu'il comporte au moins un rotor (6, 62, 63) transversal solidarisé à l'extrémité d'un ensemble de relevage (1) essentiellement constitué de bielles (2, 3, 5) formant deux structures déformables (10, 11) dans deux plans verticaux parallèles et s'articulant sur le châssis (40) de l'engin tracteur (4), à l'avant de celui-ci, ledit ensemble (1) incorporant un élément (22), extensible ou compressible, connecté au dispositif de relevage (32) dudit ensemble (1) par l'intermédiaire d'une détecteur de positionnement.

2. Dispositif selon la revendication 1 caractérisé en ce que chacune des structures déformables (10, 11) de l'ensemble de relevage (1) comporte deux bielles superposées (2, 3) sensiblement parallèles s'articulant sur le châssis (40) de l'engin tracteur (4) et aux extrémités desquelles s'articule une bielle (5) sensiblement verticale portant une extrémité de l'axe (61) du rotor (6).

3. Dispositif selon la revendication 2, caractérisé en ce que la bielle supérieure (2) incorpore un élément (22) extensible de façon limitée.

4. Dispositif selon la revendication 2 caractérisé en ce la bielle inférieure (3) incorpore un élément (22) compressible de façon limitée.

5. Dispositif selon la revendication 1 caractérisé en ce que l'ensemble de relevage (1) comporte une bielle articulée sur le châssis (40) de l'engin tracteur (4), à l'extrémité de laquelle s'articule une bielle sensiblement verticale (5) portant le rotor (6), ledit ensemble (1) et ledit rotor (6) étant reliés triangulairement par un élément (22) compressible de façon limitée.

6. Dispositif selon l'une quelconque des revendications précédentes caractérisé en ce que l'avancement de l'engin tracteur est asservi au détecteur de positionnement de l'élément (22) extensible ou compressible.

7. Dispositif selon l'une quelconque des revendications précédentes caractérisé en ce que deux rotors (62, 63) sont montés entre les flasques (64) de leur carter (60) lui-même monté pivotant, selon un axe (50) parallèle à ceux (65, 66) desdits rotors (62, 63), à l'extrémité des bielles (5), ledit carter (60) étant inclinable sous l'action de vérins (67) solidaires des bielles inférieures (3) de l'ensemble de relevage (1).
